# EUROPEAN PATENT APPLICATION

(11) **EP 3 381 592 A1**
(43) Date of publication of application: **03.10.2018**
(21) Application number: 18159236.1
(22) Date of filing: 28.02.2018
(51) Int. Cl.: B22F 3/105, B22F 5/00, B22F 5/04, B22F 7/06, B33Y 80/00, B33Y 10/00, F01D 9/02

(54) **METHOD OF MANUFACTURING A COMPONENT**

(30) Priority: 27.03.2017 GB 201704816
(71) Applicant: Rolls-Royce plc, London SW1E 6AT (GB)
(72) Inventor: Clark, Daniel, Derby, Derbyshire DE24 8BJ (GB)
(74) Representative: Rolls-Royce plc

(57) **Abstract**

A method of manufacturing a component comprises forming a body of the component using additive layer manufacturing. During formation of the body, layers of the material are arranged so that the body has a surface roughness greater than or equal to 100 µm. The method further comprises coating the body with a coating.

## Description

### TECHNICAL FIELD

The present disclosure concerns a method of manufacturing a component, an engine section stator vane and/or a gas turbine engine.

### BACKGROUND

Gas turbine engines are typically employed to power aircraft. Typically a gas turbine engine will comprise an axial fan driven by an engine core. The engine core is generally made up of one or more turbines which drive respective compressors via coaxial shafts. Engine section stator vanes are often provided at an inlet to the engine core to direct flow from the fan to the compressor.

### SUMMARY

According to a first aspect there is provided a method of manufacturing a component. The method comprises forming a body of the component using additive layer manufacturing. During formation of the body, layers of the material are arranged so that the body has a surface roughness greater than or equal to 100 µm. The method further comprises coating the body with a coating.

The coating may have a thickness that is the same order of magnitude as the surface roughness.

The body may have a surface roughness equal to or between 150 and 250 µm, e.g. 200 µm.

The layers of the body may define protrusions from a nominal body surface. The method may comprise arranging the layers so that the protrusions are angled relative to the nominal body surface.

The body may be coated from a position acutely angled from the nominal surface.

The protrusions may be arranged to be angled towards the position where the coating is applied. For example, the coating may be applied using a spray gun and the protrusions may be angled towards the spray gun.

The layers of the body may define protrusions from the surface and adjacent layers may protrude relative to each other by a distance of less than or equal to 10 % of a diameter of a beam used in the additive layer manufacturing process. For example, an electron beam or a laser beam.

Each layer of the body may laterally overlap an adjacent layer by a distance of 20 to 30% of the layer thickness.

The body may be made from a titanium alloy.

The coating may be made from a material that is stiffer than a material used to form the body.

The coating may be a metal powder filled epoxy coating.

The component may be an engine section stator vane.

In an aspect there is provided an engine section stator vane comprising a body made using additive layer manufacture and having a surface roughness greater than or equal to 100 µm. A coating is applied to the surface of the body.

The vane may be made using the method of the previous aspect.

In an aspect there is provided a method of manufacturing a component. The method comprises forming a body of the component using additive layer manufacturing. During formation of the body, layers of the material are arranged so that the body has a predetermined surface roughness. The method comprises coating the body with a coating having a thickness of the same order of magnitude as the surface roughness of the body.

The method may comprise one or more features of the previous aspect.

In an aspect there is provided an engine section stator vane comprising a body made using additive layer manufacture and having a surface roughness, and a coating applied to the surface of the body, the coating having a thickness of the same order of magnitude as the surface roughness of the body.

The vane may be made using a method of the previous aspect.

In an aspect there is provided a gas turbine engine comprising the vane according to the previous aspects.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### DESCRIPTION OF THE DRAWINGS

Embodiments will now be described by way of example only, with reference to the Figures, in which:
Figure 1 is a sectional side view of a gas turbine engine; and
Figure 2 is a schematic cross section of a portion of an engine section stator vane.

### DETAILED DESCRIPTION

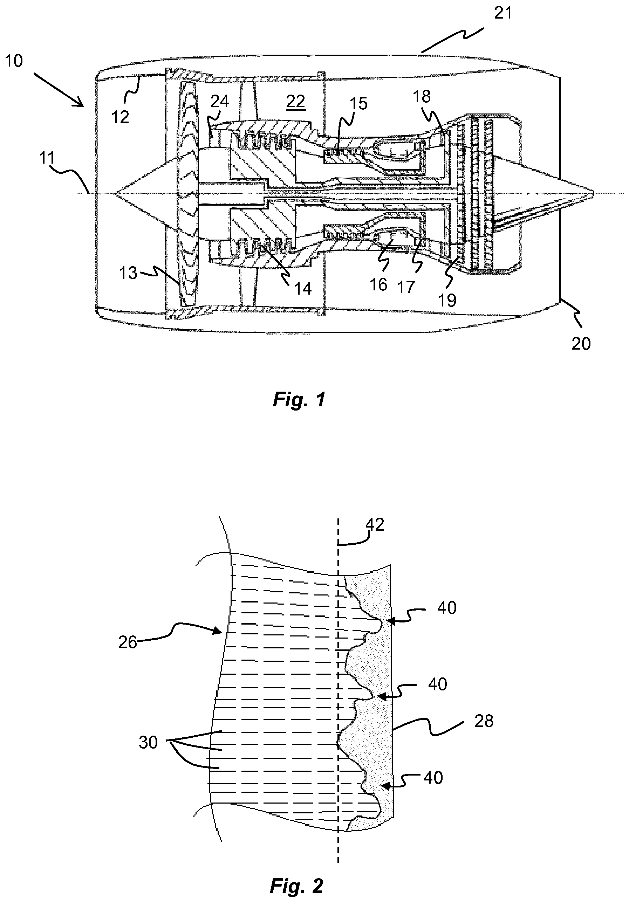

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Engine section stator (ESS) vanes 24 are provided at the inlet to the core. In the present example, the ESS vanes are non-load bearing, but in alternative embodiments they may be load bearing. Also, in the present example the vanes are hollow.

Additive layer manufacturing (ALM) is a method of manufacturing a component where layers of material are built up to define the geometry of the component. The inventor of the present application has considered using additive layer manufacture to make ESS vanes 24. However, the inventor has a concern that the stiffness of an additive layer manufactured ESS vane will not be sufficient without adding a coating to stiffen the vane.

Components made using additive layer manufacture have a surface roughness in the region of 10 to 20 µm (roughness quoted using roughness parameter Rₐ). They also have an irregular surface which agglomerated particles may be adhered to. The features of the surface of an ALM component mean that it can be extremely difficult to effectively bond a coating to the surface of the ALM component. Further, to smooth the walls to achieve a desired surface roughness requires material removal, and in such cases the wall thickness to surface roughness ratio can become significant and the functionality of the component can be affected if too much material is removed, e.g. if the walls of the ESS vane become too thin.

In order to coat a component more effectively, the present inventor proposes increasing the surface roughness of the component. The surface roughness can be at least an order of magnitude greater than the standard surface roughness. When purposely designing a surface roughness on a component it is also possible to control the regularity of the roughness. The smaller scale roughness will still be present, but this will be insignificant compared to the larger scale intended surface roughness. Using the designed increased surface roughness can allow improved coating of a component, and as such means that ALM can be used for the manufacture of ESS vanes.

Referring to Figure 2, the ESS vane (24 in Figure 1) includes a body 26 and a coating 28. The coating 28 is made from a material that is stiffer than the body 26. In the present example, the body is made from a titanium alloy and the coating is made from a metal powder filled epoxy system. In this example, the coating would be cured once it has been applied. In exemplary embodiments a UV resistant layer may be applied to the coating. In alternative embodiments, the coating may comprise ceramic material or may be an alternative metallic coating system. The coating may be applied in multiple layers. The coating may be applied using spray, sputter, electrophoretic, and/or electrodeposition.

The coating may be purposefully segmented or graded across the surface to resist differential strains through thermal expansion.

The body 26 is formed using additive layer manufacturing, as such the body is defined by layers 30 (only 3 layers labelled). The method of additive layer manufacture used in this example is a powder bed process, e.g. laser melting or electron beam melting, but in alternative embodiments a material deposition process may be used, e.g. a blown powder process or a wire extrusion process.

When the layers are formed, they are formed so as to define a surface that has a roughness greater than or equal to 100 µm, for example 150 to 250 µm, e.g. 200 µm. The roughness may be selected to be the same order of magnitude as the thickness of the coating 28. In this example, the maximum thickness of the coating is approximately 300 to 400 µm.

In defining a surface for a given roughness, the surface includes protrusions 40. The protrusions may each be defined by one or more layers. The protrusions 40 are angled (e.g. acutely angled) to a nominal surface 42 of the vane. The nominal surface is the surface profile that would exist if the surface of the vane were completely smooth. As will be described later, the protrusions are angled to be directed towards an applicator of the coating 28 in later manufacturing steps.

Each layer of the component has a thickness defined by the manufacturing process, e.g. the thickness of each layer can be defined by a diameter of a beam used in the additive layer manufacturing process (e.g. a laser or electron beam). In the present example, the layers are layered such that there is an overlap of the layers along the length of the layers (i.e. the overlap is in a thickness direction) of 20 to 30 % of the diameter of the beam (or layer thickness). The extent of protrusion of each layer compared to an adjacent layer, in this example, is approximately 10% of the beam diameter.

The series of protrusions 40 provided on the surface of the body may be arranged to be substantially regular in amplitude and wavelength.

Once the body 26 is formed using ALM, the coating 28 can be applied. The coating 28 may be applied using any suitable applicator, for example a spray gun. The applicator may apply the coating at an angle to the nominal surface of the body 26, and this angle may be similar to or equal to the angle of the protrusions 40.

Providing a body with an increased surface roughness (by the presence of protrusions 40 that protrude from the nominal surface by an order of 100 µm, instead of a more conventional order of 10 µm), means that an applied coating can bond more effectively to the surface of the body. The coating stiffens the EES vane, making it suitable for the loadings experienced by such a vane when in use on a gas turbine engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method of manufacturing a component (24), the method comprising:
forming a body (26) of the component using additive layer manufacturing, wherein during formation of the body, layers (30) of the material are arranged so that the body has a surface roughness greater than or equal to 100 µm; and
coating the body with a coating (28).

2. The method according to claim 1, wherein the coating has a thickness that is the same order of magnitude as the surface roughness.

3. The method according to claim 1 or 2, wherein the body has a roughness equal to or between 150 and 250 µm, e.g. 200 µm.

4. The method according to any one of the previous claims, wherein the layers of the body define protrusions (40) from a nominal body surface, and the method comprises arranging the layers so that the protrusions are angled relative to the nominal body surface (42).

5. The method according to claim 4, wherein the body is coated from a position acutely angled from the nominal surface, and the protrusions are arranged to be angled towards the position where the coating is applied.

6. The method according to any one of the previous claims, wherein the layers of the body define protrusions from the surface and adjacent layers protrude relative to each other by a distance of less than or equal to 10 % of a diameter of a beam used in the additive layer manufacturing process.

7. The method according to any one of the previous claims, wherein each layer of the body laterally overlaps an adjacent layer by a distance of 20 to 30% of the layer thickness.

8. The method according to any one of the previous claims, wherein the body is made from a titanium alloy.

9. The method according to any one of the previous claims, wherein the coating is made from a material that is stiffer than a material used to form the body.

10. The method according to any one of the previous claims, wherein the coating is a metal powder filled epoxy coating.

11. The method according to any one of the previous claims, wherein the component is an engine section stator vane.

12. An engine section stator vane (24) comprising:
a body (26) made using additive layer manufacture and having a surface roughness greater than or equal to 100 µm, and
a coating (28) applied to the surface of the body.

13. A gas turbine engine (10) comprising the vane according to claim 12.

14. A method of manufacturing a component (24), the method comprising:
forming a body (26) of the component using additive layer manufacturing, wherein during formation of the body, layers (30) of the material are arranged so that the body has a predetermined surface roughness; and
coating the body with a coating (28) having a thickness of the same order of magnitude as the surface roughness of the body.

15. An engine section stator vane (24) comprising:
a body (26) made using additive layer manufacture and having a surface roughness, and
a coating (28) applied to the surface of the body, the coating having a thickness of the same order of magnitude as the surface roughness of the body.
